# EUROPEAN PATENT APPLICATION

(11) **EP 4 116 500 A1**
(43) Date of publication of application: **11.01.2023**
(21) Application number: 21764906.0
(22) Date of filing: 08.02.2021
(51) Int. Cl.: E02F 3/85, E02F 9/20

(54) **CONSTRUCTION MACHINE**

(30) Priority: 04.03.2020 JP 2020036578
(71) Applicant: Yanmar Power Technology Co., Ltd., Osaka-shi Osaka 530-0013 (JP)
(72) Inventor: OKAZAKI Kohei, Chikugo-shi, Fukuoka 833-0055 (JP)
(74) Representative: Dennemeyer & Associates S.A.
(86) International application number: PCT/JP2021/004495
(87) International publication number: WO 2021/176953

(57) **Abstract**

This construction machine comprises: a work machine; an automatic controller for automatically controlling the work machine according to design information; an operation lever for manually controlling the work machine; and an automatic switch mounted on the operation lever and alternatively switching between activation and deactivation of the automatic control. The manual control of the work machine has higher priority than the automatic control.

## Description

### TECHNICAL FIELD

The present invention relates to a construction machine.

### BACKGROUND ART

Patent Literature 1 discloses a machine control ON/OFF switch provided in an upper end portion of a front face of an operation lever for operating a boom and a bucket.

In Patent Literature 1, the machine control ON/OFF switch has to be turned to OFF each time an operator feels something strange during an automatic paving and leveling work and wants to change over to a manual paving and leveling work, and the machine control ON/OFF switch has to be turned to ON if the automatic paving and leveling work is to be restored, which cannot be said to bring about a good work efficiency.

### CITATION LIST

### Patent Literature

Patent Literature 1: WO 2018/179577

### DISCLOSURE OF INVENTION

### PROBLEMS TO BE SOLVED BY THE INVENTION

The present invention has been made in view of the above circumstances and is aimed at providing a construction machine allowing an improved work efficiency of a work conducted under automatic control.

### MEANS FOR SOLVING THE PROBLEMS

A construction machine according to the present invention includes a working machine, an automatic controller that exerts automatic control on the working machine according to design information, an operation lever allowing manual control of the working machine, and an automation switch that is fitted on the operation lever so as to alternatively change the automatic control between available and unavailable, and the manual control of the working machine is made prior to the automatic control.

According to such configuration, the manual control is made prior to the automatic control when the working machine is automatically controlled by the automatic controller so as to conduct a work, so that the working machine can manually be operated even during the automatic control. On the other hand, the automatic control is easily restored by stopping manual operation. As a result, the work efficiency of the work conducted under the automatic control is improved.

### BRIEF DESCRIPTION OF DRAWINGS

FIG. 1 is a left side view of a shovel according to an embodiment of the present invention.
FIG. 2 is a perspective view of a soil removing apparatus.
FIG. 3 is a perspective view of a periphery of an operator seat.
FIG. 4A is a front view of a grip of a lifting lever.
FIG. 4B is a right side view of the grip of the lifting lever.
FIG. 4C is a back view of the grip of the lifting lever.
FIG. 5 is a diagram illustrating a hydraulic circuit provided on the shovel.
FIG. 6 is a block diagram illustrating a control system provided on the shovel.
FIG. 7 is a front view of a grip of a lifting lever in another embodiment.
FIG. 8 is a front view of a grip of a lifting lever in yet another embodiment.

### DESCRIPTION OF EMBODIMENTS

Embodiments of the present invention are described with reference to the drawings.

### Outline of Shovel

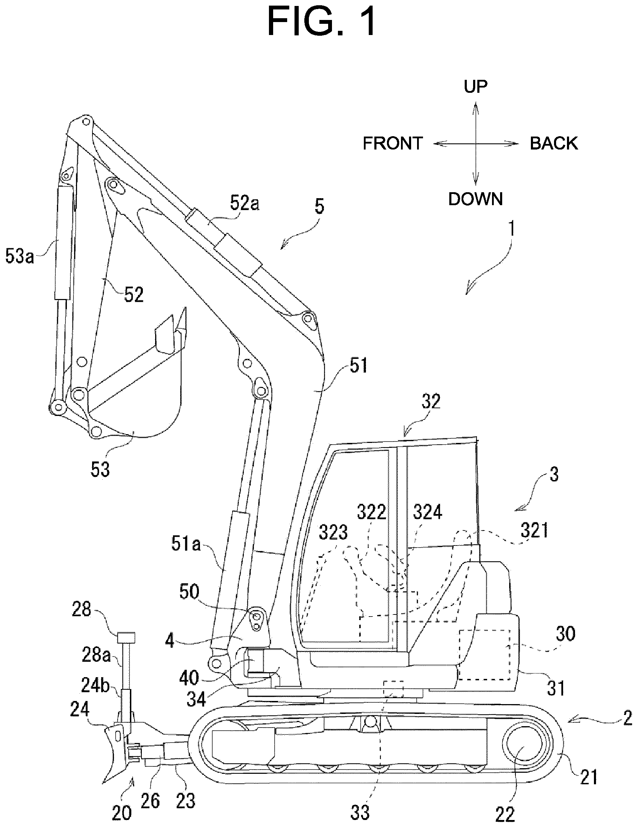

Referring to FIG. 1, a schematic structure of a shovel 1 as an example of a construction machine is initially described. As illustrated in FIG. 1, the shovel 1 includes a lower traveling body 2, an upper revolving body 3 revolvably provided above the lower traveling body 2, and an excavator 5 that is up and down pivotably supported on the upper revolving body 3. The excavator 5 is supported on the upper revolving body 3 through a boom bracket 4 that is so attached to the upper revolving body 3 as to be pivotable in a horizontal direction.

The lower traveling body 2 is driven by power from an engine 30 and allows the shovel 1 to travel and turn. The lower traveling body 2 includes a pair of crawlers 21 and 21 on the left and right and a pair of travel motors 22 and 22 on the left and right for driving the crawlers. On the lower traveling body 2, a soil removing apparatus 20 (as an example of a working machine in the present invention) is mounted to be movable up and down.

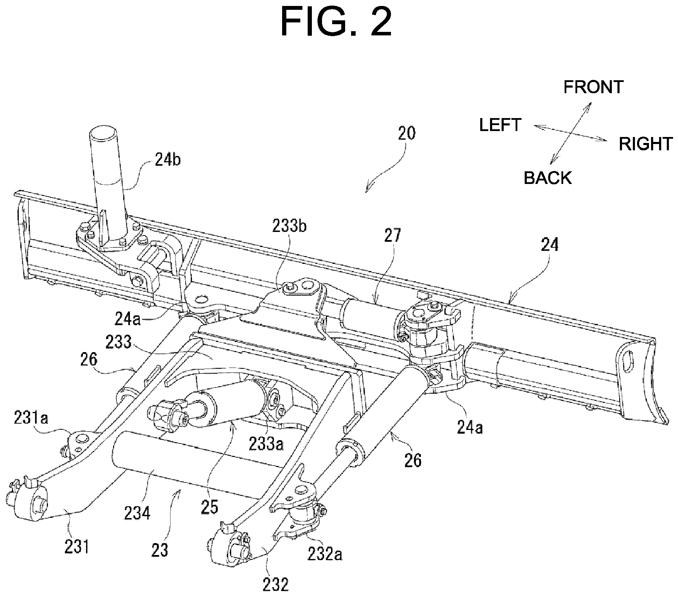

FIG. 2 is a perspective view of the soil removing apparatus 20 as viewed from the rear. The soil removing apparatus 20 includes a lift arm 23 up and down pivotably attached to the lower traveling body 2, and a soil removing blade 24 swingably attached to a front end of the lift arm 23. The soil removing blade 24 is swingable in yaw and roll directions of the shovel 1 with respect to the lift arm 23. The soil removing apparatus 20 is provided with a lift cylinder 25 that causes the lift arm 23 to pivot up and down, a pair of angle cylinders 26 and 26 on the left and right that cause both ends on the left and right of the soil removing blade 24 to swing back and forth (in the yaw direction of the shovel 1), and a tilt cylinder 27 that causes both ends on the left and right of the soil removing blade 24 to swing up and down (in the roll direction of the shovel 1).

The lift arm 23 includes a pair of lifting arms 231 and 232 on the left and right each extending in a back and forth direction, as well as a front reinforcement bar 233 and a rear reinforcement bar 234 both arranged between the lifting arms 231 and 232 in a lateral direction. On the outside of midway portions of the lifting arms 231 and 232, first cylinder brackets 231a and 232a are provided, respectively. A second cylinder bracket 233a is provided on the rear side, and a third cylinder bracket 233b on the front side, at a center in the lateral direction of the front reinforcement bar 233.

Rear ends of the lifting arms 231 and 232 are up and down pivotably supported on a truck frame (not illustrated) of the lower traveling body 2. The lift cylinder 25 is, on its rod side, up and down pivotably supported at a center in the lateral direction of the truck frame of the lower traveling body 2 and, on its bottom side, the lift cylinder 25 is up and down pivotably supported on the second cylinder bracket 233a on the front reinforcement bar 233. Thus, the lift arm 23 pivots up and down with respect to the lower traveling body 2 as a result of the extension and retraction of the lift cylinder 25. To cause the lift arm 23 to move up and down makes it possible to adjust a relative distance between the soil removing blade 24 and the ground.

On the rear side of the soil removing blade 24, a pair of fourth cylinder brackets 24a and 24a on the left and right is provided. The angle cylinders 26 and 26 are, on their bottom side, left and right pivotably supported on the fourth cylinder brackets 24a and 24a on the soil removing blade 24 and, on their rod side, the angle cylinders 26 and 26 are left and right pivotably supported on the first cylinder brackets 231a and 232a on the lifting arms 231 and 232. Thus, both ends on the left and right of the soil removing blade 24 swing back and forth with respect to the lift arm 23 as a result of the extension and retraction of the pair of angle cylinders 26 and 26. To cause both ends on the left and right of the soil removing blade 24 to swing back and forth makes it possible to adjust an angle of inclination of the soil removing blade 24 to the back and forth direction.

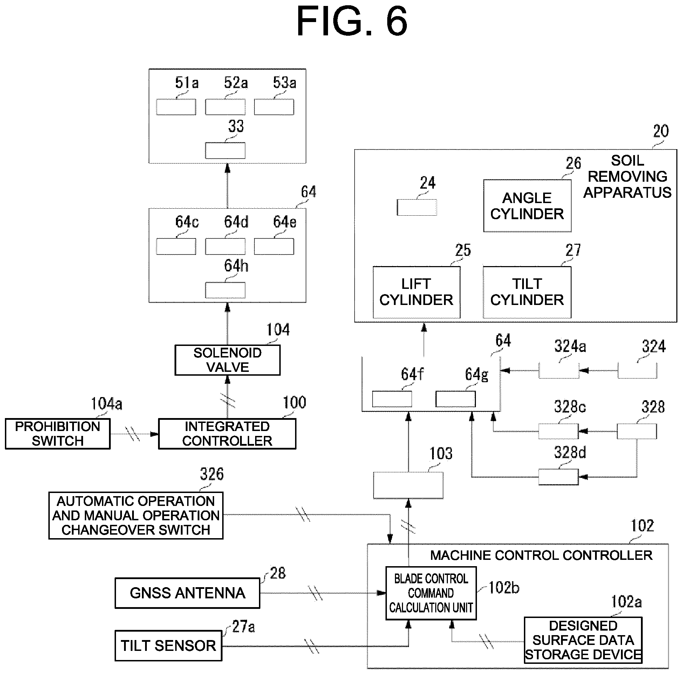

The tilt cylinder 27 is, on its bottom side, back and forth pivotably supported on the fourth cylinder bracket 24a on the right on the soil removing blade 24 and, on its rod side, the tilt cylinder 27 is back and forth pivotably supported on the third cylinder bracket 233b on the front reinforcement bar 233. Thus, both ends on the left and right of the soil removing blade 24 swing up and down with respect to the lift arm 23 as a result of the extension and retraction of the tilt cylinder 27. To cause both ends on the left and right of the soil removing blade 24 to swing up and down makes it possible to adjust the distance between a lower left or right end of the soil removing blade 24 and the ground. On the soil removing blade 24, a tilt sensor 27a (see FIG. 6) that detects the angle of inclination (angle of tilt) is provided.

A GNSS antenna 28 that receives a signal from a positioning satellite so as to carry out positioning is attached to the soil removing blade 24. The GNSS antenna 28 is attached to a pole support 24b stood on a left rear side of the soil removing blade 24 through a pole 28a. The shovel 1 of the present embodiment uses an RTK-positioning system to acquire positional information on the soil removing blade 24, and a reference station not illustrated is established at a construction site.

The upper revolving body 3 is so formed as to be revolvable about an axis vertically extending in a central portion thereof. On the upper revolving body 3, the engine 30, a counterweight 31, a cabin 32, a revolution motor 33, and the like are provided. With a driving force of the revolution motor 33 as a hydraulic motor, the upper revolving body 3 is caused to revolve through a swing bearing.

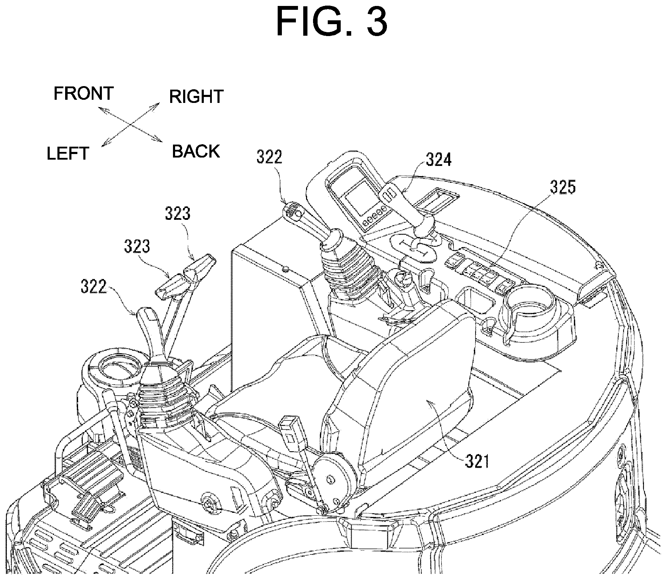

FIG. 3 is a perspective view of an operation section as viewed from the rear. The operation section enclosed with the cabin 32 is equipped with an operator seat 321 that an operator is to take. A pair of work operation levers 322 and 322 is arranged on the left and right, and a pair of travel operation levers 323 and 323 in front, of the operator seat 321. The operator is able to control the engine 30, respective hydraulic motors, respective hydraulic actuators, and the like so as to carry out traveling, revolving, working, and the like, by taking the operator seat 321 and operating the work operation levers 322 and 322, the travel operation levers 323 and 323, and the like.

On the outside of the work operation lever 322 on the right, a lifting lever 324 (corresponding to an operation lever) is arranged. The lifting lever 324 is a lever for causing the soil removing apparatus 20 to move up and down, and is moved forward so as to cause the soil removing apparatus 20 to move down and moved rearward so as to cause the soil removing apparatus 20 to move up, for instance. In rear of the lifting lever 324, a plurality of switches 325 are arranged.

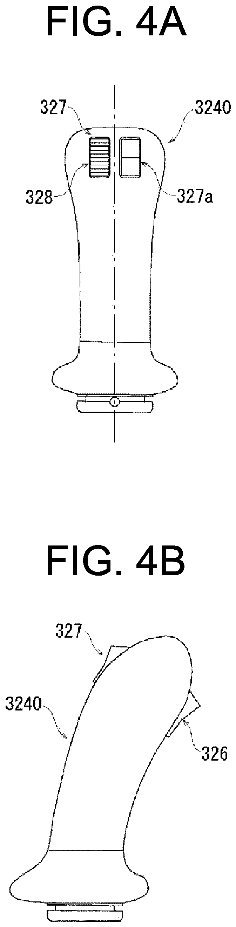

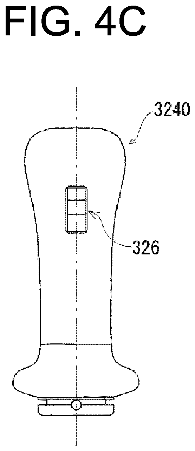

FIG. 4A is a front view of a grip 3240 of the lifting lever 324. FIG. 4B is a right side view of the grip 3240 of the lifting lever 324. FIG. 4C is a back view of the grip 3240 of the lifting lever 324. On a rear face of the grip 3240 as viewed from the operator seat 321, that is to say, on the back of the grip 3240, an automatic operation and manual operation changeover switch 326 (corresponding to an automation switch) is arranged. The automatic operation and manual operation changeover switch 326 is a switch for alternatively changing automatic control exerted by a machine control controller 102 to be described later between available and unavailable, and makes it possible to choose whether to automatically or manually operate the soil removing apparatus 20.

The lifting lever 324 includes an angling and tilting operation means 327 (corresponding to an operation means) for manually controlling either or both of an angling motion and a tilting motion of the soil removing blade 24. The angling and tilting operation means 327 is arranged on an upper front face of the grip 3240 as viewed from the operator seat 321, that is to say, in an upper portion of the front of the grip 3240. The angling and tilting operation means 327 includes an angling function and tilting function changeover switch 327a and an operating roller switch 328. The angling function and tilting function changeover switch 327a and the operating roller switch 328 are laterally aligned with each other.

The angling function and tilting function changeover switch 327a is a switch for choosing whether to operate the angle cylinders 26 and 26 or the tilt cylinder 27 with the operating roller switch 328. For instance, an angling function is chosen so as to allow the angle cylinders 26 and 26 to be operated, if a lower portion of the angling function and tilting function changeover switch 327a is pressed down, and a tilting function is chosen so as to allow the tilt cylinder 27 to be operated, if an upper portion of the angling function and tilting function changeover switch 327a is pressed down.

The operating roller switch 328 is a roller-type switch for operating the angle cylinders 26 and 26 or the tilt cylinder 27 chosen with the angling function and tilting function changeover switch 327a. If the angle cylinders 26 and 26 are chosen with the angling function and tilting function changeover switch 327a, for instance, a right end of the soil removing blade 24 is made pivot forward by rotating the operating roller switch 328 forward and the right end of the soil removing blade 24 is made pivot rearward by rotating the operating roller switch 328 rearward. If the tilt cylinder 27 is chosen with the angling function and tilting function changeover switch 327a, the right end of the soil removing blade 24 is made pivot upward by rotating the operating roller switch 328 forward and the right end of the soil removing blade 24 is made pivot downward by rotating the operating roller switch 328 rearward. An operation means for operating the angle cylinders 26 and 26 or the tilt cylinder 27 may be an operation switch of a push button type.

The boom bracket 4 is attached to a front end portion of the upper revolving body 3 through a stay 34. On the stay 34, a pivot pin 40 with an axis vertically directed is provided. The boom bracket 4 is so supported as to be horizontally pivotable (that is to say, left and right swingable) about the pivot pin 40. Between the upper revolving body 3 and the boom bracket 4, a swing cylinder (not illustrated) that extends and retracts in the back and forth direction is provided. The boom bracket 4 horizontally pivots according to the extension and retraction of the swing cylinder.

The excavator 5 is driven by power from the engine 30 and conducts a work such as excavation of earth and sand according to the operation in the operation section. The excavator 5 is up and down pivotably supported on the boom bracket 4. On the boom bracket 4, a pivot pin 50 with an axis horizontally directed is provided. Abase end portion of the excavator 5 (a base end portion of a boom 51 to be described later) is so supported as to be up and down pivotable about the pivot pin 50. The excavator 5 pivots in a vertical plane orthogonal to the axis of the pivot pin 50. The excavator 5 is capable of making a swinging motion coupled with horizontal pivoting of the boom bracket 4.

The excavator 5 includes the boom 51, an arm 52, and a bucket 53 that are independently driven so as to allow excavation of earth and sand, for instance. The boom 51 has the base end portion, which is up and down pivotably attached to the boom bracket 4, and is caused to pivot by a boom cylinder 51a that is telescopically movable. The arm 52 has a base end portion supported on a tip end portion of the boom 51, and is caused to pivot by an arm cylinder 52a that is telescopically movable. The bucket 53 has a base end portion supported on a tip end portion of the arm 52, and is caused to pivot by a bucket cylinder 53a that is telescopically movable. The boom cylinder 51a, the arm cylinder 52a, and the bucket cylinder 53a are each constituted of a hydraulic cylinder.

### Configuration of Hydraulic Circuit

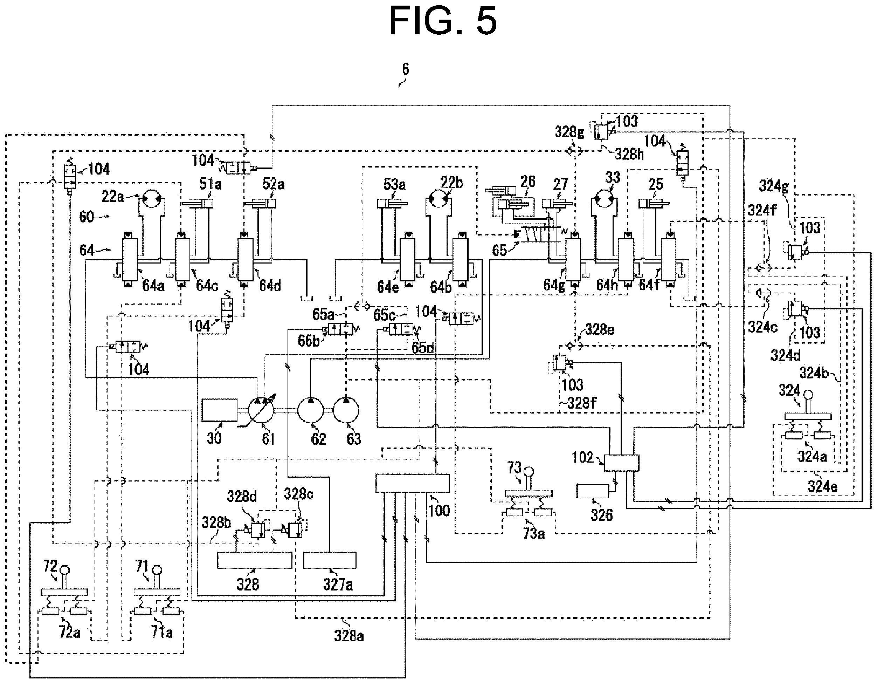

Using FIG. 5, a hydraulic circuit 6 that the shovel 1 is provided with is described. The hydraulic circuit 6 includes a plurality of hydraulic actuators 60, a variable displacement pump 61, a fixed displacement pump 62, and a pilot pump 63.

The hydraulic actuators 60 are constituted of a first traveling motor 22a, a second traveling motor 22b (the travel motor 22 on the left or the travel motor 22 on the right), the boom cylinder 51a, the arm cylinder 52a, the bucket cylinder 53a, the lift cylinder 25, the angle cylinders 26, the tilt cylinder 27, and the revolution motor 33.

The variable displacement pump 61 and the fixed displacement pump 62 are driven by the engine 30 and discharge hydraulic oil to be fed to the hydraulic actuators 60. The variable displacement pump 61 feeds the hydraulic oil to the first traveling motor 22a, the second traveling motor 22b, the boom cylinder 51a, the arm cylinder 52a, and the bucket cylinder 53a so as to drive them. The fixed displacement pump 62 feeds the hydraulic oil to the lift cylinder 25, the angle cylinders 26, the tilt cylinder 27, and the revolution motor 33 so as to drive them.

On the hydraulic actuators 60, corresponding directional control valves are provided, respectively. The directional control valves are directional control valves of a pilot type that are capable of changing the direction and volume of the hydraulic oil to be pumped from the variable displacement pump 61 and the fixed displacement pump 62 to the hydraulic actuators 60.

In the present embodiment, a first directional control valve 64a for traveling that corresponds to the first traveling motor 22a, a second directional control valve 64b for traveling that corresponds to the second traveling motor 22b, a directional control valve 64c for boom that corresponds to the boom cylinder 51a, a directional control valve 64d for arm that corresponds to the arm cylinder 52a, a directional control valve 64e for bucket that corresponds to the bucket cylinder 53a, a directional control valve 64f for lifting that corresponds to the lift cylinder 25, a directional control valve 64g for angling and tilting that corresponds to the angle cylinders 26 and the tilt cylinder 27, and a directional control valve 64h for revolution that corresponds to the revolution motor 33 are provided. Such directional control valves are collectively referred to as a control valve 64.

A selector valve 65 of a pilot type is provided between pressure oil feed pipes for the angle cylinders 26 and the tilt cylinder 27 on the one hand and the directional control valve 64g for angling and tilting on the other. If a pilot pressure is input, the selector valve 65 is capable of making a changeover in oil passage so that the pressure oil to be fed to the tilt cylinder 27 may be fed to the angle cylinders 26.

The pilot pump 63 discharges pilot oil as a command to be chiefly input to the control valve 64. In FIG. 2, an oil passage from the pilot pump 63 to the control valve 64 is partially omitted. The pilot pump 63 is driven by the engine 30, and discharges pressure oil so as to generate the pilot pressure in the oil passage.

The hydraulic circuit 6 also includes a boom operation device 71, an arm operation device 72, a revolving operation device 73, the lifting lever 324, the automatic operation and manual operation changeover switch 326, the angling function and tilting function changeover switch 327a, and the operating roller switch 328. The boom operation device 71, the arm operation device 72, and the revolving operation device 73 are constituted of the pair of work operation levers 322 and 322. Although not illustrated in FIG. 5, the hydraulic circuit 6 also includes the pair of travel operation levers 323, a bucket operation device, a swinging operation device, and the like.

The boom operation device 71 includes a remote control valve 71a for boom that is to change the direction and pressure of the pilot pressure oil to be fed to the directional control valve 64c for boom. The remote control valve 71a for boom is fed with the pressure oil discharged from the pilot pump 63. The remote control valve 71a for boom generates the pilot pressure according to the operation direction and operation amount of the boom operation device 71.

The arm operation device 72 includes a remote control valve 72a for arm that is to change the direction and pressure of the pilot pressure oil to be fed to the directional control valve 64d for arm. The remote control valve 72a for arm is fed with the pressure oil discharged from the pilot pump 63. The remote control valve 72a for arm generates the pilot pressure according to the operation direction and operation amount of the arm operation device 72.

The revolving operation device 73 includes a remote control valve 73a for revolution that is to change the direction and pressure of the pilot pressure oil to be fed to the directional control valve 64h for revolution. The remote control valve 73a for revolution is fed with the pressure oil discharged from the pilot pump 63. The remote control valve 73a for revolution generates the pilot pressure according to the operation direction and operation amount of the revolving operation device 73.

The lifting lever 324 includes a remote control valve 324a for lifting that is to change the direction and pressure of the pilot pressure oil to be fed to the directional control valve 64f for lifting. The remote control valve 324a for lifting is fed with the pressure oil discharged from the pilot pump 63. The remote control valve 324a for lifting generates the pilot pressure according to the operation direction and operation amount of the lifting lever 324.

To a first oil passage 324b between the remote control valve 324a for lifting and the directional control valve 64f for lifting, a first machine control oil passage 324d is connected through a first shuttle valve 324c. The first machine control oil passage 324d is fed with the pilot pressure oil from the pilot pump 63. The first shuttle valve 324c feeds, out of the pressure oil in the first oil passage 324b between the remote control valve 324a for lifting and the first shuttle valve 324c and the pressure oil in the first machine control oil passage 324d between a proportional solenoid valve 103 (to be described later) and the first shuttle valve 324c, the pressure oil, which is higher in pressure, to the directional control valve 64f for lifting.

To a second oil passage 324e between the remote control valve 324a for lifting and the directional control valve 64f for lifting, a second machine control oil passage 324g is connected through a second shuttle valve 324f. The second machine control oil passage 324g is fed with the pilot pressure oil from the pilot pump 63. The second shuttle valve 324f feeds, out of the pressure oil in the second oil passage 324e between the remote control valve 324a for lifting and the second shuttle valve 324f and the pressure oil in the second machine control oil passage 324g between the proportional solenoid valve 103 (to be described later) and the second shuttle valve 324f, the pressure oil, which is higher in pressure, to the directional control valve 64f for lifting.

The operating roller switch 328 changes the direction and pressure of the pilot pressure oil to be fed to the directional control valve 64g for angling and tilting. The operating roller switch 328 generates the pilot pressure according to a rotation direction and a rotation amount. Specifically, on a third oil passage 328a and a fourth oil passage 328b between the pilot pump 63 and the directional control valve 64g for angling and tilting, proportional solenoid valves 328c and 328d are provided, respectively, and the proportional solenoid valves 328c and 328d are capable of adjusting the pilot pressure in accordance with a control command from the operating roller switch 328.

To the third oil passage 328a, a third machine control oil passage 328f is connected through a third shuttle valve 328e. The third machine control oil passage 328f is fed with the pilot pressure oil from the pilot pump 63. The third shuttle valve 328e feeds, out of the pressure oil in the third oil passage 328a between the proportional solenoid valve 328c and the third shuttle valve 328e and the pressure oil in the third machine control oil passage 328f between the proportional solenoid valve 103 (to be described later) and the third shuttle valve 328e, the pressure oil, which is higher in pressure, to the directional control valve 64g for angling and tilting.

To the fourth oil passage 328b, a fourth machine control oil passage 328h is connected through a fourth shuttle valve 328g. The fourth machine control oil passage 328h is fed with the pilot pressure oil from the pilot pump 63. The fourth shuttle valve 328g feeds, out of the pressure oil in the fourth oil passage 328b between the proportional solenoid valve 328d and the fourth shuttle valve 328g and the pressure oil in the fourth machine control oil passage 328h between the proportional solenoid valve 103 (to be described later) and the fourth shuttle valve 328g, the pressure oil, which is higher in pressure, to the directional control valve 64g for angling and tilting.

The proportional solenoid valve 103 is provided on each of the first machine control oil passage 324d, the second machine control oil passage 324g, the third machine control oil passage 328f, and the fourth machine control oil passage 328h. The proportional solenoid valve 103 is capable of adjusting the pilot pressure in accordance with a control command from the machine control controller 102 to be described later. Consequently, the machine control controller 102 is capable of operating the directional control valve 64f for lifting and the directional control valve 64g for angling and tilting so as to control the driving of the lift cylinder 25, the angle cylinders 26, and the tilt cylinder 27.

The angling function and tilting function changeover switch 327a gives a control command to a solenoid valve 65b provided on a fifth oil passage 65a between the pilot pump 63 and the selector valve 65. The solenoid valve 65b opens the fifth oil passage 65a according to an opening signal from the angling function and tilting function changeover switch 327a. As a result, the selector valve 65 receives the pilot pressure from the pilot pump 63 and makes a changeover in oil passage so that the pressure oil to be fed from the directional control valve 64g for angling and tilting to the tilt cylinder 27 may be fed to the angle cylinders 26.

A solenoid valve 104 as a prohibition device is provided on each of an oil passage between the remote control valve 71a for boom and the directional control valve 64c for boom, an oil passage between the remote control valve 72a for arm and the directional control valve 64d for arm, and an oil passage between the remote control valve 73a for revolution and the directional control valve 64h for revolution. The solenoid valve 104 is also provided on an oil passage between a remote control valve for bucket not illustrated and the directional control valve 64e for bucket. If an opening signal from an integrated controller 100 to be described later is cut off, the solenoid valves 104 interrupt the pilot pressure transmitted from the respective remote control valves. As a result, the directional control valve 64c for boom, the directional control valve 64d for arm, the directional control valve 64e for bucket, and the directional control valve 64h for revolution each take a neutral position because the pilot pressure is not input to any of input ports thereof, and the pressure oil is not fed to the corresponding hydraulic actuators, so that the revolution of the upper revolving body 3 and the motion of the excavator 5, which are to be achieved by the operation of the boom operation device 71, the arm operation device 72, the bucket operation device, and the revolving operation device 73, are prohibited.

### Control System of Shovel

An example of a control system provided on the shovel 1 is briefly described. The shovel 1 includes the integrated controller 100 as a controller. The integrated controller 100 as a main control unit exerting drive control of the shovel 1 outputs a control instruction to the engine 30 and the hydraulic pumps as described above.

In addition, the shovel 1 includes the machine control controller 102 (corresponding to an automatic controller) for automatically controlling the soil removing apparatus 20, which includes the soil removing blade 24, the lift cylinder 25, the angle cylinders 26, and the tilt cylinder 27.

To the machine control controller 102, the automatic operation and manual operation changeover switch 326 for alternatively changing the automatic control exerted by the machine control controller 102 between available and unavailable is connected. To choose automatic operation with the automatic operation and manual operation changeover switch 326 makes it possible to automatically control the soil removing apparatus 20.

The machine control controller 102 automatically controls the soil removing apparatus 20 according to design information. Specifically, the machine control controller 102 controls the soil removing apparatus 20 based on the difference between target position information on the soil removing blade 24 obtained from designed surface data (exemplary design information) of an execution scheme and current position information on the soil removing blade 24.

The designed surface data is electronic data obtained by converting the height of a finished surface in respective horizontal coordinate positions at the construction site, where construction is planned, into three-dimensional data, and is input to the machine control controller 102 in advance. The designed surface data is stored in a designed surface data storage device 102a. Based on the designed surface data, a target position of the soil removing blade 24 is set.

In the present embodiment, the current position information on the soil removing blade 24 is acquired by the tilt sensor 27a and the GNSS antenna 28. Specifically, coordinate information on the soil removing blade 24 that is acquired by the GNSS antenna 28 and information on the angle of inclination of the soil removing blade 24 as detected by the tilt sensor 27a are combined with each other so as to acquire the current position information containing the position and attitude of the soil removing blade 24. The machine control controller 102 previously stores information about a width of the soil removing blade 24, a position where the GNSS antenna 28 is attached to the soil removing blade 24, and the like, which makes it possible to accurately calculate the current position information on the soil removing blade 24.

The machine control controller 102 includes a blade control command calculation unit 102b. The blade control command calculation unit 102b reads the target position information on the soil removing blade 24 from the designed surface data stored in the designed surface data storage device 102a and compares the target position information as read and the current position information on the soil removing blade 24 with each other so as to calculate control command values to be sent to the respective proportional solenoid valves 103 so that the soil removing blade 24 may take the target position.

The proportional solenoid valves 103 adjust, in accordance with control commands from the machine control controller 102, the pilot pressure to be input to the directional control valve 64f for lifting and the directional control valve 64g for angling and tilting, so as to automatically control the driving of the lift cylinder 25, the angle cylinders 26, and the tilt cylinder 27.

The machine control controller 102 gives a control command to a solenoid valve 65d provided on a sixth oil passage 65c between the pilot pump 63 and the selector valve 65. The solenoid valve 65d opens the sixth oil passage 65c according to an opening signal from the machine control controller 102. As a result, the selector valve 65 receives the pilot pressure from the pilot pump 63 and makes a changeover in oil passage so that the pressure oil to be fed from the directional control valve 64g for angling and tilting to the tilt cylinder 27 may be fed to the angle cylinders 26. Thus, the machine control controller 102 can choose the driving of the tilt cylinder 27 or the driving of the angle cylinders 26. In the automatic control by the machine control controller 102, control of the angle cylinders 26 is normally not exerted. For this reason, the tilting function is chosen with the angling function and tilting function changeover switch 327a when the machine control controller 102 is to exert the automatic control.

The proportional solenoid valves 103 and the proportional solenoid valves 328c and 328d are set so that the pilot pressure for automatic control, which is output from the proportional solenoid valves 103 in accordance with the control commands from the machine control controller 102, may be lower than both of the pilot pressure for manual control, which is output from the remote control valve 324a for lifting by the operation of the lifting lever 324, and the pilot pressure for manual control, which is output from the proportional solenoid valves 328c and 328d by the operation of the operating roller switch 328. As a result, if the automatic control and the manual control are simultaneously exerted, the pilot pressure for manual control, which is on the high pressure side, is chosen by the shuttle valves (the first shuttle valve 324c, the second shuttle valve 324f, the third shuttle valve 328e, and the fourth shuttle valve 328g). In other words, operation signals from the lifting lever 324 and the operating roller switch 328 are made prior to an automatic control signal from the machine control controller 102 and, accordingly, the soil removing apparatus 20 can manually be operated even during the automatic control. On the other hand, the automatic control is easily restored by stopping manual operation.

As described above, the shovel 1 (as an example of the construction machine) of the present embodiment includes the soil removing apparatus 20 (as an exemplary working machine), the machine control controller 102 (as an exemplary automatic controller) which exerts automatic control on the soil removing apparatus 20 according to design information, the lifting lever 324 (as an exemplary operation lever) which allows manual control of the soil removing apparatus 20, and the automatic operation and manual operation changeover switch 326 (as an exemplary automation switch) which is fitted on the lifting lever 324 so as to alternatively change the automatic control between available and unavailable, and the manual control of the soil removing apparatus 20 is made prior to the automatic control.

According to such configuration, the manual control is made prior to the automatic control when the soil removing apparatus 20 is automatically controlled by the machine control controller 102 so as to conduct a work, which makes it possible to manually operate the soil removing apparatus 20 even during the automatic control. On the other hand, the automatic control is easily restored by stopping manual operation. As a result, the work efficiency of the work conducted under the automatic control is improved.

In the shovel 1 according to the present embodiment, the lifting lever 324 may include the angling and tilting operation means 327 for manually controlling either or both of the angling motion and the tilting motion of the soil removing blade 24, which is provided at the front end of the soil removing apparatus 20.

In the shovel 1 according to the present embodiment, the angling and tilting operation means 327 may be arranged on the upper front face of the grip 3240 of the lifting lever 324 as viewed from the operator seat 321.

Such configuration makes it possible to operate the angling and tilting operation means 327 with a thumb while holding the grip 3240, so that a work conducted under the automatic control is smoothly transferred to a work conducted under the manual control and the work conducted under the automatic control is restored by stopping manual operation, which improves the work efficiency of the work conducted under the automatic control.

In the shovel 1 according to the present embodiment, the automatic operation and manual operation changeover switch 326 may be arranged on the rear face of the grip 3240 of the lifting lever 324 as viewed from the operator seat 321.

Such configuration makes it possible to operate the automatic operation and manual operation changeover switch 326 with a forefinger while holding the grip 3240, so that the automatic control by the machine control controller 102 is easily changed between available and unavailable.

In the shovel 1 according to the present embodiment, the angling and tilting operation means 327 may include the angling function and tilting function changeover switch 327a, which makes it possible to choose whether to operate the angle cylinders 26 or the tilt cylinder 27, and the operating roller switch 328 for operating the angle cylinders 26 and 26 or the tilt cylinder 27 as chosen with the angling function and tilting function changeover switch 327a.

Such configuration can reduce the number of switches to be arranged on the grip 3240 of the lifting lever 324, leading to an improved operability.

The above description has been made on an embodiment of the present invention based on the drawings, while specific configurations should not be understood to be limited to those in the embodiment as described above. The scope of the present invention is indicated not only by the description on the above embodiment but the claims and, moreover, modifications equivalent in significance and scope to the claims are all included in the present invention.

The structure as employed in the above embodiment can be employed in any other embodiment. Specific configurations of the respective components are not limited solely to those in the above embodiment, and various modifications can be made without departing from the gist of the present disclosure.

### Other Embodiments

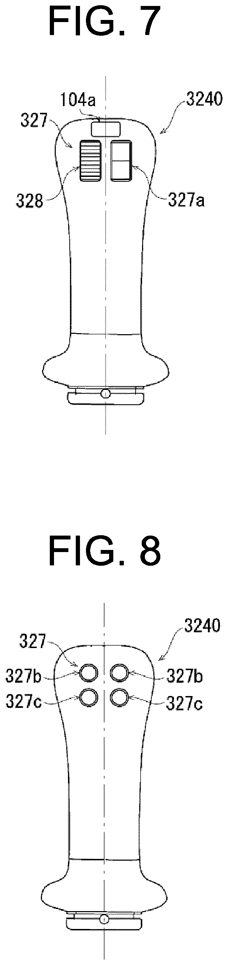

(1) The shovel 1 may have a configuration where the solenoid valves 104 for prohibiting the revolution of the upper revolving body 3 and the motion of the excavator 5 are included and a prohibition switch 104a for changing a prohibition function of the solenoid valves 104 f between available and unavailable is arranged on the upper front face of the grip 3240. In an example illustrated in FIG. 7, the prohibition switch 104a is provided above the angling and tilting operation means 327.
   If the prohibition switch 104a is pressed down and a signal from the prohibition switch 104a is input to the integrated controller 100, an integrated controller 7 cuts off electric currents flowing through the solenoid valves 104 provided between the input ports for the pilot pressure of the directional control valves for controlling the boom cylinder 51a, the arm cylinder 52a, the bucket cylinder 53a, and the revolution motor 33 on the one hand and the respective remote control valves on the other so as to interrupt the pilot pressure transmitted from the respective remote control valves, and the revolution of the upper revolving body 3 and the motion of the excavator 5 are prohibited. To prohibit the revolution of the upper revolving body 3 and the motion of the excavator 5 makes it possible to prevent the excavator 5 from coming into contact with the GNSS antenna 28 to have a breakdown and prevent the severance of a cable connecting the GNSS antenna 28 and the tilt sensor 27a with the upper revolving body 3. Since the prohibition switch 104a is arranged on the upper front face of the grip 3240, the prohibition switch 104a is smoothly operated when a revolution position or a working machine position is to be changed during an automatic paving and leveling work, and throwing of the prohibition switch 104a is prevented from being forgotten when the automatic paving and leveling work is to be restarted.
   The prohibition switch 104a may be a push button switch or a seesaw type switch. The prohibition switch 104a does not necessarily need to be arranged on the grip 3240 of the lifting lever 324 but may be allocated to one of the switches 325 in rear of the lifting lever 324.
(2) The automatic control by the machine control controller 102 may be made unavailable if the operation of the lifting lever 324 and the angling and tilting operation means 327 is detected. According to such configuration, the automatic control is stopped by operating the lifting lever 324 and the angling and tilting operation means 327 if the operator perceives abnormality during the work conducted under the automatic control, so that excessive excavation of the ground, and the like are prevented. It is particularly preferable that the automatic control is stopped if a lifting operation of the lifting lever 324 on the soil removing apparatus 20 is detected. The lifting operation of the lifting lever 324 is detectable with a pressure switch or the like.
(3) In the above embodiment, the angling and tilting operation means 327 is constituted of the angling function and tilting function changeover switch 327a and the operating roller switch 328, which is not limitative. For instance, another roller switch may be provided instead of the angling function and tilting function changeover switch 327a and, in that case, one roller switch may be allocated to an angling operation and the other to a tilting operation. The angling and tilting operation means 327 may also be constituted of a pair of angle switches 327b and 327b and a pair of tilt switches 327c and 327c, as illustrated in FIG. 8.
(4) In the above embodiment, a changeover in oil passage is made by the selector valve 65 in order to operate the angle cylinders 26 and the tilt cylinder 27, while directional control valves corresponding to the angle cylinders 26 and the tilt cylinder 27, respectively, may be provided.
(5) As another embodiment, the shovel 1 may be provided with an omnidirectional prism instead of the GNSS antenna 28. The omnidirectional prism is automatically followed by a total station that is separately provided at the construction site. The total station is capable of measuring the distance and angle to the omnidirectional prism and acquiring the coordinate information on the soil removing blade 24 from measurement data. The coordinate information on the soil removing blade 24 is transferred from the total station to the blade control command calculation unit 102b by wireless. Other configurations are the same as those in the above embodiment.

### DESCRIPTION OF REFERENCE NUMERALS

1 Shovel
2 Lower traveling body
3 Upper revolving body
5 Working machine
6 Hydraulic circuit
7 Integrated controller
20 Soil removing apparatus
23 Lift arm
24 Soil removing blade
25 Lift cylinder
26 Angle cylinder
27 Tilt cylinder
100 Integrated controller
102 Machine control controller
321 Operator seat
324 Lifting lever
326 Automatic operation and manual operation changeover switch
327 Angling ang tilting operation means
327a Angling function and tilting function changeover switch
328 Operating roller switch
3240 Grip

## Claims

1. A construction machine comprising: a working machine; an automatic controller that exerts automatic control on the working machine according to design information; an operation lever allowing manual control of the working machine; and an automation switch that is fitted on the operation lever so as to alternatively change the automatic control between available and unavailable between available and unavailable,
wherein the manual control of the working machine is made prior to the automatic control.

2. The construction machine according to claim 1, wherein
the construction machine is a shovel,
the working machine is a soil removing apparatus mounted, to be movable up and down, on a lower traveling body of the shovel, and
the operation lever is a lifting lever that causes the soil removing apparatus to move up and down.

3. The construction machine according to claim 2, wherein the operation lever includes an operation means for manually controlling either or both of an angling motion and a tilting motion of a soil removing blade provided at a front end of the soil removing apparatus.

4. The construction machine according to claim 3, wherein the operation means is arranged on an upper front face of a grip of the operation lever as viewed from an operator seat.

5. The construction machine according to any one of claims 1 through 4, wherein the automation switch is arranged on a rear face of a grip of the operation lever as viewed from an operator seat.

6. The construction machine according to any one of claims 2 through 5, wherein
the construction machine is a shovel,
a prohibition device that prohibits revolution of an upper revolving body of the shovel and motion of an excavator of the shovel is provided, and
a prohibition switch that changes a prohibition function of the prohibition device between available and unavailable is arranged on an upper front face of a grip of the operation lever.
